# FASCICULE DE BREVET EUROPEEN

(11) **EP 1 243 190 B1**
(45) Date de publication et mention de la délivrance du brevet: **09.11.2005**
(21) Numéro de dépôt: 02405202.9
(22) Date de dépôt: 15.03.2002
(51) Int. Cl.: A43B 5/04, B29D 31/518, A43B 3/26, A43B 7/28

(54) **Procédé de fabrication d'une coque de chaussure de ski**
Verfahren zum Herstellen einer Schale eines Schischuhes
Method for manufacturing a shell of a ski boot

(30) Priorité: 22.03.2001 CH 5322001
(43) Date de publication de la demande: 25.09.2002
(73) Titulaire: LANGE INTERNATIONAL S.A., CH-1700 Fribourg (CH)
(72) Inventeur: Cagliari, Peter, 31044 Montebelluna (TV) (CH); Bassetto, Davide, 31015 Conegliano (TV) (CH)
(74) Mandataire: Bugnion Genève

(56) Documents cités:
- CH-A- 678 794
- FR-A- 2 032 834
- FR-A- 2 119 653
- FR-A- 2 630 894
- US-A- 3 922 800
- US-A- 3 958 291

## Description

La présente invention a pour objet un procédé de fabrication par injection d'une coque de chaussure de ski en matière plastique en différentes pointures, ou plus généralement de forme différente pour une pointure différente dans le but d'obtenir, pour un même modèle de chaussure (extérieur), des volumes chaussants différents sans modifier les caractéristiques mécaniques et la chaussure.

Jusqu'ici, pour chaque pointure de chaussure il était nécessaire de fabriquer un moule particulier de dimensions adaptées à la pointure désirée. Par ailleurs, il n'est pas possible de simplement changer la forme, c'est-à-dire le noyau que l'on introduit dans le moule pour obtenir la forme intérieure de la coque, pour obtenir un volume chaussant différent, car il n'est pas acceptable d'augmenter l'épaisseur de la coque, ce qui augmenterait par trop le poids de la chaussure conduisant à une modification importante de la rigidité de la coque et, entre autre, des caractéristiques de flexion, et poserait en outre des problèmes d'injection en raison des surépaisseurs injectées.

Il est connu, par différents moyens, d'adapter la forme intérieure de la coque au pied de l'utilisateur en agissant sur le chausson intérieur de confort.

Du brevet US 3 977 098 on connaît un chausson de confort comprenant deux poches latérales dont l'ouverture est constituée par une fente médiane, dans chacune desquelles le détaillant ou l'utilisateur peut glisser des plaques de feutre ou autre matériau de différentes épaisseurs pour augmenter localement l'épaisseur du chausson de manière à remplir les espace entre le pied et la coque de la chaussure. Une solution similaire est décrite dans le brevet US 4,523,392.

Du brevet CH 626 793 on connaît un chausson dont la structure extérieure est bouclée de manière à permettre la fixation d'empiècements par un système de micro-boucles de type "VELCRO" (marque déposée).

Dans le brevet US 5,509,217 (EP 0 657 116) il est proposé de maintenir sur le chausson de confort des pièces correctrices au moyen d'une doublure extérieure élastique analogue à une chaussette.

Du brevet US 3,769,392 (FR 2,111,147) il est connu de confectionner un chausson intérieur de chaussure de ski par l'injection de polyuréthanne expansé dans un soulier souple à double paroi, chaussé au pied du skieur et disposé dans la coque d'une chaussure de ski. Un procédé analogue est décrit dans les brevets US 3,834,044, EP 0 237 526 et CH 678 794.

Du brevet FR 2 630 894 on connaît par ailleurs un procédé d'adaptation d'une chaussure de ski à coque consistant à introduire in situ une matière fluide entre la coque et un chausson de confort, le pied du skieur étant dans le chausson, cette matière fluide devenant molle et déformable par durcissement.

Le préambule de la revendication 1 est connu de US-A-3 958 291.

Jusqu'ici on s'est donc toujours contenté d'adapter une coque de pointure correspondant à la pointure de l'utilisateur, soit au moyen de mesures appliquées au chausson de confort, soit en injectant un matériau in situ entre la coque et le chausson. L'adaptation obtenue n'est donc qu'une adaptation morphologique de la coque au pied de l'utilisateur par addition de matériau souple et déformable, l'application de ces enseignements ne donnant d'ailleurs pas de résultat acceptable car on réduit par trop la tenue du pied et par conséquent les performances de la chaussure dans la conduite des skis. De plus, la plupart de ces solutions ne sont pas stables dans le temps du fait du tassement des mousses souples. Le problème du coût lié à la fabrication de moules de différentes nature reste donc entier.

La présente invention propose une solution simple à ce problème.

Le procédé selon l'invention est caractérisé en ce qu'on fabrique premièrement, par injection dans un moule contenant une première forme, une coque de grande pointure, puis qu'on replace la coque obtenue dans le même moule ou dans un moule simplifié, qu'on positionne dans la coque une nouvelle forme de géométrie ou de pointure différente de la géométrie, respectivement de la pointure de la première forme et qu'on injecte un matériau plastique alvéolaire dans la coque de manière à obtenir une coque de volume chaussant différent de celui de la coque initiale.

Le procédé selon l'invention permet d'obtenir plusieurs pointures ou plus généralement plusieurs formes internes pour des pieds de même pointure, à partir d'une coque de pointure donnée.

Il convient de souligner que le coût des coquilles d'un moule est beaucoup plus élevé que le coût d'une forme.

La matière injectée dans la coque est de préférence un polyuréthanne bi-composants donc alvéolaire. On relèvera que le chausson de confort est souvent confectionné avec le même matériau, mais pour l'injection dans la coque on utilise un polyuréthanne bi-composants de meilleure tenue que pour le chausson.

Un exemple de mise en oeuvre du procédé est décrit ci-après en relation au dessin annexé.

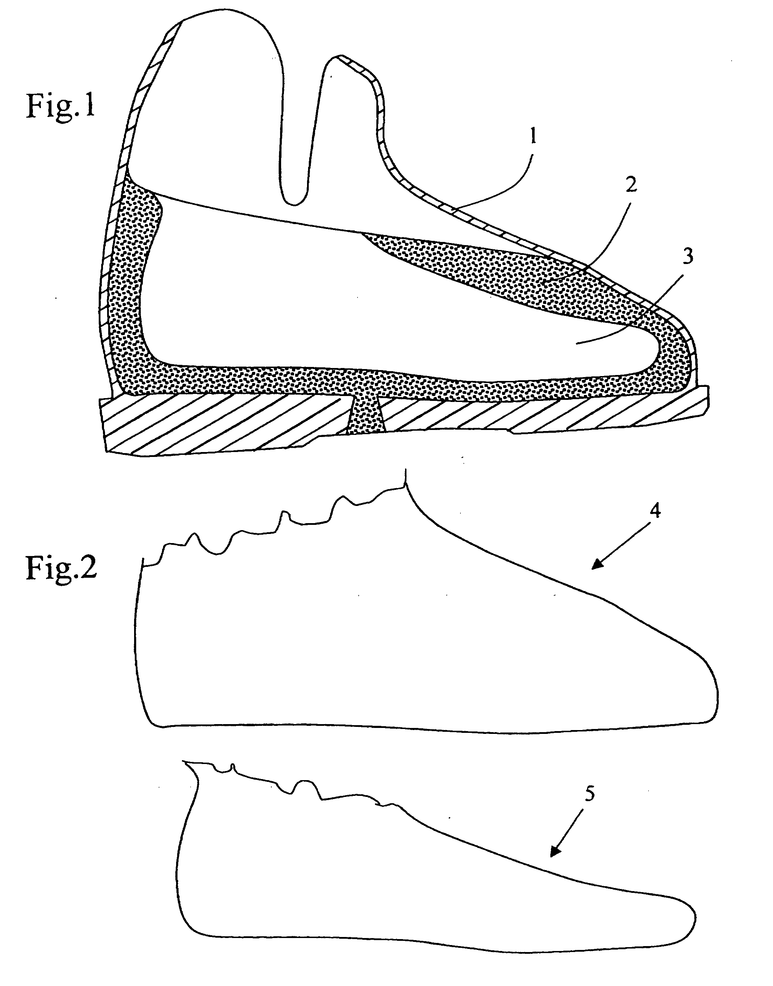

La figure 1 est une vue en coupe longitudinale verticale d'une coque de chaussure de ski.

La figure 2 représente schématiquement les deux formes introduites successivement dans le moule de la coque ou lors de la mise en oeuvre du procédé.

Pour obtenir cette coque, on fabrique tout d'abord par injection dans un moule contenant une première forme 4, une coque 1 de grande pointure. On replace ensuite cette coque 1 dans le même moule ou dans un moule simplifié et on positionne dans la coque 1 une nouvelle forme 5 de pointure inférieure ou d'une géométrie différente à celle de la forme 4. On injecte ensuite un matériau plastique 2 dans la coque 1 de manière à obtenir une coque de pointure inférieure présentant un volume 3. La forme de ce volume 3 peut être sensiblement différente de la forme du volume de la coque initiale 1.

L'opération d'injection peut être renouvelée plusieurs fois avec des matériaux différents.

Avant l'injection du matériau alvéolaire, des inserts peuvent être positionnés sur la forme 5 pour augmenter localement la tenue du pied où cela est judicieux.

## Revendications

1. Procédé de fabrication par injection d'une coque de chaussure de ski en matière plastique en différents volumes chaussant, dans lequel on fabrique premièrement, par injection dans un moule contenant une première forme (4), une coque de grande pointure (1), **caractérisé en ce qu'**on replace ensuite la coque obtenue dans le même moule ou dans un moule simplifié, qu'on positionne dans la coque une nouvelle forme (5) de géométrie ou de pointure différentes de la géométrie, respectivement de la pointure de la première forme et qu'on injecte un matériau plastique alvéolaire (2) dans la coque de manière à obtenir une coque de volume chaussant différent de celui de la coque d'origine.

2. Procédé selon la revendication 1, **caractérisée en ce que** le matériau plastique injecté dans la coque est un polyuréthanne bi-composants.

3. Procédé selon la revendication 1 ou 2, **caractérisé en ce que** l'opération d'injection dans la coque est renouvelée plusieurs fois avec des matériaux différents.

4. Procédé selon l'une des revendications 1 à 3, **caractérisé en ce qu'**avant l'injection de matériau alvéolaire on positionne des inserts sur la forme (5).

## Patentansprüche

1. Spritzgussverfahren zur Herstellung einer Schischuhschale aus Kunststoffmaterial mit unterschiedlichen, dem Fuss gut angepassten Volumen, wonach als erstes eine Schale mit grosser Schuhgrösse (1) durch Spritzen in eine einen ersten Formkern (4) enthaltende Form hergestellt wird, **dadurch gekennzeichnet, dass** anschliessend die erhaltene Schale wieder in dieselbe Form oder in eine vereinfachte Form eingesetzt wird, dass man in diese Schale einen neuen Formkern (5) einsetzt, dessen Geometrie oder Grösse von der Geometrie bzw. der Grösse des ersten Formkerns verschieden ist, und dass in die Schale ein zellenförmiges Kunststoffmaterial (2) gespritzt wird, um eine Schale mit einem dem Fuss angepassten Volumen zu erhalten, welches von dem der ursprünglichen Schale verschieden ist.

2. Verfahren nach Anspruch 1, **dadurch gekennzeichnet, dass** das gespritzte Kunststoffmaterial Zweikomponenten-Polyurethan ist.

3. Verfahren nach Anspruch 1 oder 2, **dadurch gekennzeichnet, dass** die Operation des Spritzens in die Schale mehrfach mit verschiedenen Materialien wiederholt wird.

4. Verfahren nach einem der Ansprüche 1 bis 3, **dadurch gekennzeichnet, dass** vor dem Spritzen des zellenförmigen Materials Einsatzteile auf dem Formkern (5) positioniert werden.

## Claims

1. Process for the manufacture by injection of a body of a ski boot made of plastics with different shoe size volumes wherein first a body having a great shoe size (1) is manufactures by injection in a mould containing a first model (4), **characterised in that** the body thus obtained is then reinserted into the same mould or into a simplified mould, another model (5) having a geometry or a size different from the geometry or, respectively, the shoe size of the first model, is placed into the body, and a cellular plastic material (2) is injected into the body so as to obtain a body having a shoe size volume different from that of the original body.

2. Process according to claim 1, **characterised in that** the plastic material that is injected into the body is a two component polyurethane.

3. Process according to claim 1 or 2, **characterised in that** the operation of injection into the body is repeated several times with different materials.

4. Process of any one of claims 1 to 3, **characterised in that** inserts are placed on the model (5) before the injection of the cellular material.
